# EUROPÄISCHE PATENTSCHRIFT

(11) **EP 1 613 847 B1**
(45) Veröffentlichungstag und Bekanntmachung des Hinweises auf die Patenterteilung: **20.07.2011**
(21) Anmeldenummer: 04715298.8
(22) Anmeldetag: 27.02.2004
(51) Int. Cl.: F01P 11/10, F01P 5/06, F04D 29/08

(54) **DICHTUNGSELEMENT FUER EINE KUEHLMODULANORDNUNG EINES KRAFTFAHRZEUGES UND KUEHLMODULANORDNUNG MIT EINEM SOLCHEN DICHTUNGSELEMENT**
SEALING ELEMENT FOR A COOLING MODULE SYSTEM OF A MOTOR VEHICLE AND COOLING MODULE SYSTEM HAVING SUCH A SEALING ELEMENT
ELEMENT D'ETANCHEITE POUR ENSEMBLE MODULE DE REFROIDISSEMENT D'UN VEHICULE AUTOMOBILE, ET ENSEMBLE MODULE DE REFROIDISSEMENT POURVU D'UN TEL ELEMENT D'ETANCHEITE

(30) Priorität: 09.04.2003 DE 10316108
(43) Veröffentlichungstag der Anmeldung: 11.01.2006
(73) Patentinhaber: Daimler AG, 70327 Stuttgart (DE)
(72) Erfinder: TONHÄUSER, Jochen, 73732 Esslingen (DE); WEBER, Willi, 74535 Mainhardt (DE)
(74) Vertreter: JENSEN & SON
(86) Internationale Anmeldenummer: PCT/EP2004/001954
(87) Internationale Veröffentlichungsnummer: WO 2004/090299

(56) Entgegenhaltungen:
- WO-A-98/37319
- DE-A- 3 737 391
- FR-A- 1 126 304
- US-A- 4 213 426
- PATENT ABSTRACTS OF JAPAN vol. 1996, no. 05, 31. Mai 1996 (1996-05-31) -& JP 08 004530 A (AISIN CHEM CO LTD), 9. Januar 1996 (1996-01-09)

## Beschreibung

Die Erfindung betrifft eine Kühlmodulanordnung eines Kraftfahrzeugs mit einem Dichtungselement nach dem Oberbegriff des Anspruchs 1.

Die aufgrund immer größer werdender Motorleistungen und immer höher werdender Wärmeeinträge von Nebenverbrauchern in das Kühlsystem steigenden Wärmeströme, die von dem Kühlsystem abzuführen sind, stellen immer höhere Anforderungen an die Leistungen der Kühlmodule. Gleichzeitig wird der zur Verfügung stehende Raum für die Installation solcher Kühlmodule in Kraftfahrzeugen immer kleiner.

Eine kompakte, aus der Praxis hinlänglich bekannte Möglichkeit, die Durchströmung des Kühlmoduls zu verbessern und damit die Kühlleistung zu erhöhen, bietet der Einsatz eines Axiallüfters mit einem geringen Randspalt. Hierbei ist allerdings eine Abdichtung des Spaltes zwischen der rahmenfesten Lüfterhaube und der motorfesten Lüfterzarge erforderlich. Es entstehen jedoch Probleme bei dieser Abdichtung durch Relativbewegungen zwischen dem rahmenfest gelagerten Kühlmodul mit daran befestigter Lüfterhaube und der motorfesten Lüfterzarge aufgrund von Motorbewegungen und Verwindungen des Fahrzeugs sowie durch Bauteiltoleranzen auftretenden Abweichungen der Bauteile zur Idealposition, welche durch ein geeignetes Dichtungselement ausgeglichen werden müssen.

Zur Bewältigung dieser Probleme sind aus dem Stand der Technik bereits verschiedene Dichtungselemente bekannt. So offenbart zum Beispiel die WO-A-98/37319, auf welcher der Oberbegriff des Anspruchs 1 basiert, ein Dichtungselement zur Abdichtung zwischen einer Lüfterzarge und einer Lüfterhaube einer Kühlmodulanordnung eines Kraftfahrzeugs, dessen eines Ende an der Lüfterzarge befestigt ist und dessen anderes Ende außen auf der Lüfterhaube aufliegt. Das Dichtungselement ist elastisch, sodass es möglichst immer dicht auf der Außenseite der Lüfterhaube aufliegt. Außerdem weist das Dichtungselement verstärkende Verlängerungsabschnitte auf, die an dem der Lüfterhaube zugewandten Ende des Dichtungselements über dieses hinaus ragen, sodass zumindest die Verlängerungsabschnitte jederzeit mit der Lüfterhaube in Kontakt bleiben, wodurch gewährleistet ist, dass bei zu großen Verschiebungen zwischen Lüfterhaube und Lüfterzarge einerseits das Dichtungselement seine Form behält und nicht in die Lüfterhaube hinein gezogen wird und andererseits eine Ventilfunktion erzielt wird.

Weitere Dichtungselemente zur Abdichtung zwischen einer Lüfterhaube und einer Lüfterzarge einer Kühlmodulanordnung eines Kraftfahrzeugs sind zum Beispiel aus der EP-A-1 143 125 und der JP-A-08-004530 bekannt. Diese Dichtungselemente aus einem elastischen Material sind mit ihren beiden Enden außen an der Lüfterhaube bzw. außen an der Lüfterzarge eingehakt bzw. festgeklemmt. Im Fall der EP-A-1 143 125 weist das Dichtungselement außerdem einen Balgabschnitt zum Ausgleich von radialen Relativbewegungen auf.

Ferner zeigt die US-A-4,213,426 ein solches Dichtungselement aus einem elastischen Material, das einerseits an einem Kühlergehäuse befestigt ist und andererseits einem Außenumfang eines Lüftergehäuses mit einem kleinen Spalt dazwischen zugewandt ist, wobei auch dieses Dichtungselement ferner einen Balgabschnitt zum Ausgleich von radialen Relativbewegungen aufweist.

Ein weiteres Problem bei Dichtungselementen zwischen Lüfterhaube und Lüfterzarge besteht darin, dass die herkömmlichen Dichtungselemente zur Gewährleistung ihrer Dichtfunktion eine relativ große Abmessung in Axialrichtung der Kühlmodulanordnung aufweisen. Dies hat insbesondere bei der Montage des Kühlmoduls Nachteile wegen der engen Platzverhältnisse im Motorraum eines Kraftfahrzeugs.

Es ist deshalb eine Aufgabe der vorliegenden Erfindung, ein Dichtungselement für eine Kühlmodulanordnung eines Kraftfahrzeugs bereitzustellen, welches einerseits eine zuverlässige Dichtfunktion gewährleistet und andererseits auch bei engen Platzverhältnissen einfach zu montieren ist.

Diese Aufgabe wird durch eine Kühlmodulanordnung mit den Merkmalen des Anspruchs 1 gelöst. Vorteilhafte Ausgestaltungen und Weiterbildungen der Erfindung sind in den jeweiligen abhängigen Ansprüchen angegeben.

Die erfindungsgemäße Kühlmodulanordnung zeichnet sich dadurch aus, dass das Dichtungselement im montierten Zustand (Betriebsposition) an einem Bauteil von Lüftergehäuse (bzw. -zarge) und Lüfterhaube befestigt ist und auf dem Außenumfang des anderen Bauteils von Lüftergehäuse und Lüfterhaube dichtend aufliegt, und dass das Dichtungselement in eine auf das eine Bauteil von Lüftergehäuse und Lüfterhaube, an dem es befestigt ist, zurückgeklappte bzw. zurückgefaltete Montageposition bringbar und in dieser durch einen umlaufenden Gummiwulst fixierbar ist, wobei das Dichtungselement in der Montageposition derart in Richtung der Betriebsposition vorgespannt ist, dass es beim Lösen der Fixierung der Montageposition in seine Betriebsposition auf den Außenumfang des anderen Bauteils von Lüftergehäuse und Lüfterhaube aufklappt bzw. aufschnappt.

Das Dichtungselement wird nach seiner Anbringung an dem einen Bauteil (Lüfterhaube oder Lüftergehäuse) in seine Montageposition zusammengeklappt bzw. -gefaltet, in welcher Stellung es sich in einfacher Weise durch den umlaufenden Gummiwulst selbst fixiert, sodass für die Montage des Kühlmoduls eine sehr kompakte Konstruktion erzielt wird, was die Montage auch bei engen Platzverhältnissen wesentlich vereinfacht. Das Dichtungselement kann dann bei der Montage des Kühlmoduls mit einem einfachen Handgriff aufgeklappt bzw. aufgeschnappt werden, um in seine Betriebsposition auf dem Außenumfang des anderen Bauteils zu gelangen.

In einer Ausführungsform der Erfindung weist das Dichtungselement eine Stoßfläche zur festen Verbindung mit dem einen Bauteil von Lüftergehäuse und Lüfterhaube mittels Hart-Weich-Verbindungstechnologie auf.

In einer alternativen Ausführungsform weist das Dichtungselement an seinem dem einen Bauteil von Lüftergehäuse und Lüfterhaube zugewandten Ende wenigstens ein vorstehendes Element zum festen Eingriff in eine entsprechende, in dem einen Bauteil vorgesehene Ausnehmung auf.

In einer Ausgestaltung der Erfindung ist dieses wenigstens eine vorstehende Element des Dichtungselements ein selbstspreizender Gummiwulst. Ferner kann das Dichtungselement an seinem dem einen Bauteil von Lüftergehäuse und Lüfterhaube zugewandten Ende ein Hakenelement zum Eingriff mit einem entsprechenden, an dem einen Bauteil vorgesehenen Hakenelement zur radialen Halterung des Dichtungselements an dem einen Bauteil aufweisen.

In noch weiterer Ausgestaltung der Erfindung ist das Dichtungselement zusätzlich mittels einer separaten mechanischen Fixiereinrichtung in seiner Montageposition fixierbar.

Weitere Merkmale und Merkmalskombinationen ergeben sich aus der Beschreibung sowie den Zeichnungen. Konkrete Ausführungsbeispiele der Erfindung sind in den Zeichnungen vereinfacht dargestellt und in der nachfolgenden Beschreibung näher erläutert. Es zeigen
- Fig. 1: eine schematische Darstellung einer Kühlmodulanordnung eines Kraftfahrzeugs, bei der ein Dichtungselement gemäß der vorliegenden Erfindung angewendet werden kann;
- Fig. 2: eine schematische Schnittdarstellung eines ersten Aus- führungsbeispiels eines Dichtungselements gemäß der vorliegenden Erfindung;
- Fig. 3: eine schematische Schnittdarstellung eines zweiten Aus- führungsbeispiels eines Dichtungselements gemäß der vorliegenden Erfindung;
- Fig. 4A: eine schematische Schnittdarstellung des Dichtungs- elements von Fig. 3 in seiner Montageposition; und
- Fig. 4B: eine schematische Schnittdarstellung des Dichtungs- elements von Fig. 3 in seiner Betriebsposition.

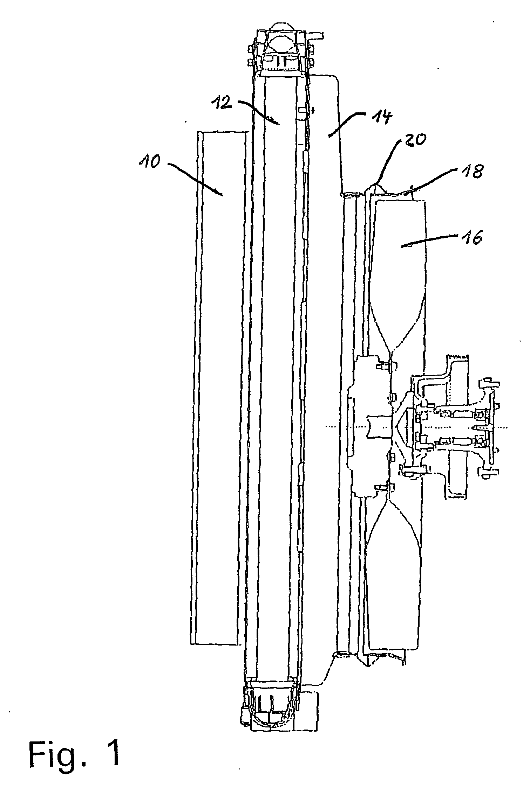

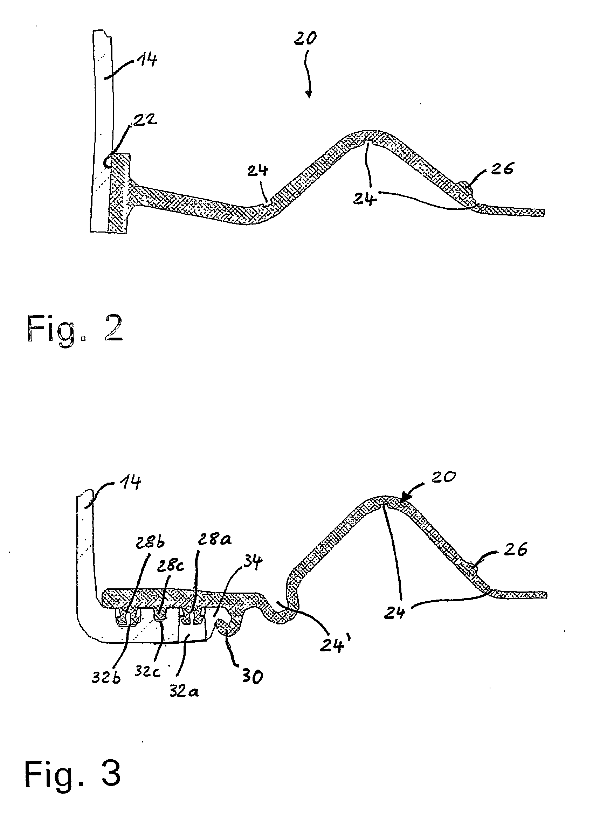

In Figur 1 ist zunächst schematisch der Aufbau einer Kühlmodulanordnung eines Kraftfahrzeugs dargestellt, bei welchem vorteilhafterweise ein Dichtungselement gemäß der vorliegenden Erfindung eingesetzt werden kann. Anschließend wird anhand der Figuren 2 bis 4 der Aufbau und die Funktionsweise von Dichtungselementen gemäß der vorliegenden Erfindung näher beschrieben.

Die Kühlmodulanordnung von Figur 1 weist ein an einem Rahmen (nicht dargestellt) des Kraftfahrzeugs zu haltendes Kühlmodul auf, das aus einem Ladelüftkühler 10, einem Wasserkühler 12 und einer Lüfterhaube 14 besteht. Die Lüfterhaube 14 schließt sich an den Außenumfang des Wasserkühlers 12 an und verjüngt sich in Richtung zu einem Motor (nicht dargestellt) des Kraftfahrzeugs hin. Mit dem Motor und durch diesen angetrieben ist ein Axiallüfter 16 verbunden, der radial von einer Lüfterzarge bzw. einem Lüftergehäuse 18 vollständig umschlossen ist. Der Axiallüfter 16 und das Lüftergehäuse 18 sind motorfest montiert.

Da der Aufbau und die Komponenten einer derartigen Kühlmodulanordnung dem Fachmann aus dem Stand der Technik hinlänglich bekannt sind, wird an dieser Stelle auf eine detailliertere Beschreibung derselben verzichtet. Es wird aber darauf hingewiesen, dass die vorliegende Erfindung insbesondere nicht auf spezielle Arten von Axiallüftern oder Wasserkühlern beschränkt ist.

Zur Optimierung der luftseitigen Durchströmung des Kühlmoduls 10-14 ist zwischen der Lüfterhaube 14 an dem Wasserkühler 12 und dem Lüftergehäuse 18 des Axiallüfters 16 ein Dichtungselement 20 vorgesehen. Das Dichtungselement 20 besteht aus einem elastischen Material wie beispielsweise Gummi, um die Relativbewegungen zwischen der rahmenfesten Lüfterhaube 14 und dem motorfesten Lüftergehäuse 18 bei Bewegungen des Motors auszugleichen. Ferner ist das Dichtungselement 20 entsprechend der Konstruktion der Kühlmodulanordnung im wesentlichen kreisförmig ausgebildet.

Figur 2 zeigt ein erstes Ausführungsbeispiel eines Dichtungselements 20 gemäß der Erfindung in Seitenschnittansicht. Das Dichtungselement 20 ist mit einem Ende an der Lüfterhaube 14 befestigt, während sein anderes Ende frei ist. Die Befestigung des Dichtungselements 20 an der Lüfterhaube 14 erfolgt bei dieser Ausführungsform mittels einer Hart-Weich-Verbindungstechnik, d.h. zum Beispiel durch Anspritzen, Anschweissen, Anvulkanisieren oder Ankleben einer endseitigen Stoßfläche 22 des Dichtungselements 20 aus weichem Gummimaterial an die Lüfterhaube 14 aus hartem Kunststoff.

Das Dichtungselement 20 ist in Figur 2 in seiner langgestreckten Betriebsposition dargestellt, wobei das der Lüfterhaube 14 abgewandte freie Ende des Dichtungselements 20 auf der Außenseite des in dieser Figur nicht dargestellten Lüftergehäuses 18 aufliegt und zur Abdichtung nach unten in Figur 2 vorgespannt ist. Wie in Figur 2 zu erkennen, weist das Dichtungselement 20 an mehreren Sollknickstellen Einkerbungen 24 (d.h. Bereiche mit vermindertem Materialquerschnitt) auf, um das Dichtungselement 20 an diesen Stellen zusammenfalten bzw. - klappen zu können. Aufgrund der elastischen Materialeigenschaften der Dichtungslippe 20 ist diese in Richtung der in Figur 2 dargestellten Betriebsposition vorgespannt, in der sie langgestreckt ist und mit ihrem der Lüfterhaube 14 abgewandten Ende dichtend auf dem Außenumfang des Lüftergehäuses 18 aufliegt.

Zum Fixieren des Dichtungselements 20 in seiner zusammengeklappten Montageposition ist das Dichtungselement 20 mit einem umlaufenden Gummiwulst 26 versehen, welcher das Dichtungselement 20 in seiner zusammengeklappten Montageposition halten soll. Zusätzlich kann das Dichtungselement 20 auch mittels einer separaten Fixiereinrichtung (nicht dargestellt), wie beispielsweise einer Schnur, einer Schelle oder einem Draht, in seiner Montageposition fixiert werden.

In einem modifizierten Ausführungsbeispiel ist eine weiche Dichtlippe 20 direkt an eine harte Lüfterhaube 14 angespritzt, wobei ein Vulkanisieren oder Kleben entbehrlich ist. In einem weiteren modifizierten Ausführungsbeispiel sind Dichtungselement 20 und Lüfterhaube 14 über einen I-Stoß, d.h. im Bereich ihrer Schmalseiten miteinander verbunden.

In einem weiteren modifizierten Ausführungsbeispiel ist in der Lüfterhaube 14 wenigstens eine Perforation vorgesehen, die formschlüssig vom Dichtungselement 20 durch- und/oder hintergriffen wird.

Ein zweites Ausführungsbeispiel eines Dichtungselements 20 der Erfindung ist in Figur 3 veranschaulicht. Das Dichtungselement 20 ist ebenfalls in seiner langgestreckten Betriebsposition dargestellt und weist auch mehrere Einkerbungen 24 an Sollknickstellen und einen Gummiwulst 26 als integrierte Fixiereinrichtung auf. Neben den Einkerbungen 24 ist das Dichtungselement 20 mit einem scharnierartigen Abschnitt 24' versehen, welcher ebenfalls als Sollknickstelle dient.

Das Dichtungselement 20 ist an seinem der Führungshaube 14 zugewandten Ende mit mehreren vorstehenden Elementen 28a, 28b und 28c sowie einem Hakenelement 30 ausgebildet, welche mit entsprechenden Gegenelementen der Führungshaube 14 in Eingriff stehen, um eine feste bzw. formschlüssige Verbindung zwischen Dichtungselement 20 und Führungshaube 14 zu erzeugen.

Ein erstes vorstehendes Element 28a in Form eines selbstspreizenden Gummiwulstes ist in eine erste Ausnehmung 32a in Form einer Durchbrechung in der Lüfterhaube 14 eingeschnappt. Die Durchbrechung 32a ist dabei derart konisch ausgebildet, dass die dem Gummiwulst 28a zugewandte Öffnung kleiner als die dem Gummiwulst 28a abgewandte Öffnung ausgeführt und mit einer Art Widerhaken bzw. Rastnasen 32d versehen ist, sodass der selbstspreizende Gummiwulst 28a in der Ausnehmung 32a festgehalten wird. Die Konizität ist auch der Grund dafür, dass die Ausnehmung 32a als eine Durchbrechung ausgebildet ist, da die Lüfterhaube 14 bei ihrer Fertigung sowohl nach innen als auch nach außen entformt werden muss. Da jedoch die Durchbrechung 32a eine Schwächung des Materials der Lüfterhaube 14 bewirkt, ist sie nicht über den gesamten Umfang der Lüfterhaube 14, sondern nur in einzelnen Segmenten ausgebildet. In den übrigen Segmenten ist diese Ausnehmung 32a als etwas breitere Nut ausgebildet, in welche der Gummiwulst 28a ohne große Klemmwirkung eingreifen kann. Die obige Kombination aus zwei "Ausnehmungsarten" (Durchbrechung und Nut) für die Ausnehmung 32a ist erforderlich, um eine ausreichende Festigkeit der Lüfterhaube 14 zu gewährleisten und andererseits den umlaufenden Gummiwulst 28a über den gesamten Umfang in die Ausnehmung einlegen zu können.

Ein zweites vorstehendes Element 28b ist ebenfalls als selbstspreizender Gummiwulst ausgebildet und in eine zweite Ausnehmung 32b eingesetzt. Hierbei zeigt Figur 3 ein Segment der zweiten Ausnehmung 32b in Form der breiteren Nut anstelle der Durchbrechung. Die Ausnehmung 32b ist aber ebenfalls mit abwechselnden Nutausnehmungen und Durchbrechungsausnehmungen ausgebildet, wobei die Nuten und Durchbrechungen der ersten und zweiten Ausnehmung 32a, 32b vorzugsweise zueinander versetzt angeordnet sind, um eine ausreichende Festigkeit der Lüfterhaube 14 zu gewährleisten.

Die Gummiwülste 28a, 28b sind in dem Ausführungsbeispiel von Figur 3 als über den gesamten Umfang umlaufend ausgebildet. Alternativ ist es auch möglich, die Gummiwülste 28a, 28b nur in einzelnen Segmenten vorzusehen, die den Segmenten der Durchbrüche der Ausnehmungen 32a, 32b entsprechen. In diesem Fall könnten die nutartigen Segmente der Ausnehmungen 32a, 32b entfallen, was zu einer höheren Festigkeit der Lüfterhaube 14, aber zu einer schwächeren Verbindung zwischen Dichtungselement 20 und Lüfterhaube 14 führen würde. Die schwächere Verbindung kann zum Beispiel über ein geeignetes Klebemittel ausgeglichen werden.

Zwischen den beiden als Gummiwulst ausgebildeten vorstehenden Elementen 28a, 28b ist ein drittes vorstehendes Element 28c vorgesehen, welches in Form eines einfachen umlaufenden Vorsprungs ausgebildet ist und in eine umlaufende dritte nutartige Ausnehmung 32c in der Lüfterhaube 14 eingreift. Dieses dritte vorstehende Element 28c dient der Aufnahme von axialen Kräften auf das Dichtungselement 20, der Fixierung des Dichtungselements 20 auf der Lüfterhaube 14 sowie der Abdichtung der beiden Bauteile gegeneinander.

Ferner ist an der dem Dichtungselement 20 zugewandten Kante der Lüfterhaube 14 ein hakenförmiger Vorsprung 34 ausgebildet, in den das Hakenelement 30 des Dichtungselements 20 eingreift. Dieser hakenförmige Vorsprung 34 an der Lüfterhaube dient der Aufnahme radialer Kräfte auf das Dichtungselement 20 und vermindert somit die Beanspruchung des Dichtungselements 20, 28a, 28b, 28c.

Die oben beschriebene und in Figur 3 dargestellte Konstruktion des Dichtungselements 20 erlaubt seine Fertigung als kostengünstiges Extrusionsteil. Außerdem ist eine schnelle Montage des Dichtungselements 20 an der Lüfterhaube 14 möglich, da da das Dichtungselement 20 einfach auf den Außenumfang der Lüfterhaube 14 aufgeschnappt werden kann, wobei die vorstehenden Elemente 28a-c des Dichtungselements 20 vorzugsweise aufgrund einer Vorspannung des elastischen Materials des kreisförmigen Dichtungselements 20 radial nach innen in die entsprechenden Ausnehmungen 32a-c einschnappen.

Es wird nun die Funktionsweise des erfindungsgemäßen Dichtungselements 20 anhand des zweiten Ausführungsbeispiels von Figur 3 näher beschrieben. Die folgenden Erläuterungen gelten aber analog für das erste Ausführungsbeispiel des Dichtungselements 20 von Figur 2.

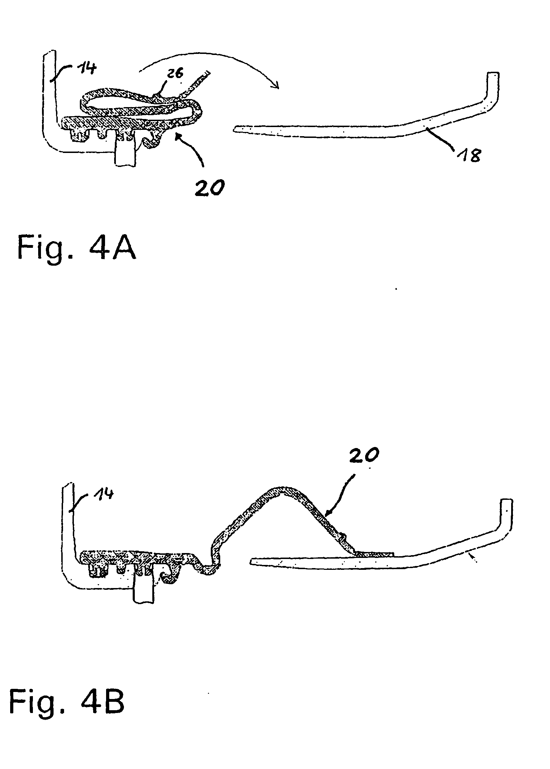

Figur 4A zeigt das Dichtungselement 20 in seiner über die Sollknickstellen zusammengeklappten Montageposition, in der es durch den umlaufenden Gummiwulst 26 gehalten wird. In dieser Montageposition bildet die Einheit aus Kühlmodul 10-14 und angebrachtem Dichtungselement 20 einen äußerst kompakten Aufbau, der die Montage des Kühlmoduls selbst bei sehr engen Platzverhältnis im Motorraum eines Kraftfahrzeugs ermöglicht.

Die Fixierung des Dichtungselements 20 in dieser kompakten Montageposition kann dann nach der Montage des Kühlmoduls 10-14 am Rahmen mit einer einfachen Handbewegung gelöst werden, sodass das Dichtungselement 20 aufgrund seiner inhärenten Vorspannung automatisch in die in Figur 4B gezeigte Betriebsposition aufschnappt. Aufgrund der radial nach innen gerichteten Vorspannung auch des freien Endes des Dichtungselements 20 liegt dieses dichtend auf dem Außenumfang des Lüftergehäuses 18 auf.

Während die vorliegende Erfindung oben anhand verschiedener bevorzugter Ausführungsbeispiele näher erläutert worden ist, ist es für den Fachmann offensichtlich, dass auch weitere Veränderungen und Modifikationen insbesondere des Dichtungselements innerhalb des Schutzumfangs der vorliegenden Erfindung liegen, wie er durch die anhängenden Ansprüche definiert ist.

In den obigen Ausführungsbeispielen ist das Dichtungselement 20 jeweils fest an der rahmenfesten Lüfterhaube 14 angebracht, während das freie Ende dichtend auf dem Lüftergehäuse 18 aufliegt. Es ist aber ebenso möglich, das Dichtungselement 20 fest an dem Lüftergehäuse 18 anzubringen und das freie Ende dichtend auf der Lüfterhaube 14 aufliegen zu lassen. Der Aufbau und die Funktionsweise des Dichtungselements 20 bleiben hierbei im wesentlichen die gleichen.

Das Dichtungselement 20 gemäß dem obigen zweiten Ausführungsbeispiel ist mittels drei vorstehender Elemente 28a-c und eines Hakenelements 30 mit der Lüfterhaube 14 verbunden. Die vorliegende Erfindung ist aber weder auf die Anzahl von drei vorstehenden Elementen noch auf die Form der vorstehende Elemente beschränkt. So können zum Beispiel auch nur ein oder zwei vorstehende Elemente mit im wesentlichen Hakenform in entsprechende Hinterschnitte von Ausnehmungen in der Lüfterhaube 14 eingreifen. Auch kann bei Bedarf auf das Hakenelement 30 des Dichtungselements 20 und den entsprechenden hakenförmigen Vorsprung 34 der Lüfterhaube 14 verzichtet werden.

Während in dem obigen zweiten Ausführungsbeispiel von Figur 3 die vorstehenden Elemente 28a-c des Dichtungselements 20 allein durch die radial nach innen gerichtete Vorspannung des Dichtungselements 20 in die entsprechenden Ausnehmungen 32a-c der Lüfterhaube 14 einschnappen, kann die Festigkeit der Verbindung zusätzlich durch ein geeignetes Klebemittel erhöht werden.

## Patentansprüche

1. Kühlmodulanordnung für ein Kraftfahrzeug, mit einem mit einem Motor verbundenen Axiallüfter (16), der von einem Lüftergehäuse (18) umschlossen ist, wobei sowohl der Axiallüfter als auch das Lüftergehäuse motorfest angebracht sind;
einem Kühler (12), der an einem Rahmen befestigt ist und an dessen dem Axiallüfter zugewandten Seite eine Lüfterhaube (14) vorgesehen ist; und
einem Dichtungselement (20) aus einem elastischen Material zwischen dem Lüftergehäuse (18) und der Lüfterhaube (14) zum Abdichten des Spaltes zwischen dem Lüftergehäuse und der Lüfterhaube, wobei das Dichtungselement (20) im montierten Zustand (Betriebsposition) an einem Bauteil von Lüftergehäuse und Lüfterhaube (18, 14) befestigt ist und auf dem Außenumfang des anderen Bauteils von Lüftergehäuse und Lüfterhaube dichtend aufliegt,
**dadurch gekennzeichnet,**
**dass** das Dichtungselement (20) in eine auf das eine Bauteil von Lüftergehäuse und Lüfterhaube (18, 14), an dem es befestigt ist, zurückgeklappte bzw. zurückgefaltete Montageposition bringbar und in dieser durch einen umlaufenden Gummiwulst (26) fixierbar ist, wobei das Dichtungselement in der Montageposition derart in Richtung der Betriebsposition vorgespannt ist, dass es beim Lösen der Fixierung der Montageposition in seine Betriebsposition auf den Außenumfang des jeweils anderen Bauteils von Lüftergehäuse und Lüfterhaube aufklappt oder aufschnappt.

2. Kühlmodulanordnung nach Anspruch 1,
**dadurch gekennzeichnet,**
**dass** das Dichtungselement (20) mit dem einen Bauteil von Lüftergehäuse und Lüfterhaube (18, 14) mittels Hart-Weich-Verbindungstechnologie, insbesondere mittels Anspritzen, fest verbunden ist.

3. Kühlmodulanordnung nach Anspruch 1,
**dadurch gekennzeichnet,**
**dass** das Dichtungselement (20) an seinem dem einen Bauteil von Lüftergehäuse und Lüfterhaube (18, 14) zugewandten Ende wenigstens ein vorstehendes Element (28a-c) aufweist, welches mit einer entsprechende Ausnehmung (32a-c) in dem einen Bauteil in Eingriff steht.

4. Kühlmodulanordnung nach Anspruch 3,
**dadurch gekennzeichnet,**
**dass** das Dichtungselement (20) an seinem dem einen Bauteil von Lüftergehäuse und Lüfterhaube (18, 14) zugewandten Ende ferner ein Hakenelement (30) aufweist, das mit einem entsprechenden, an dem einen Bauteil vorgesehenen hakenförmigen Vorsprung (34) zur radialen Halterung des Dichtungselements an dem einen Bauteil in Eingriff steht.

5. Kühlmodulanordnung nach einem der Ansprüche 1 bis 4,
**dadurch gekennzeichnet,**
**dass** das Dichtungselement (20) zusätzlich mittels einer separaten mechanischen Fixiereinrichtung in seiner Montageposition fixierbar ist.

6. Kühlmodulanordnung nach einem der Ansprüche 1 bis 5,
**dadurch gekennzeichnet,**
**dass** das Dichtungselement (20) an der Lüfterhaube (14) befestigt ist und in der Betriebsposition mit seinem freien Ende auf dem Außenumfang des Lüftergehäuses (18) dichtend aufliegt.

## Claims

1. Cooling module arrangement for a motor vehicle, comprising an axial fan (16) connected to an engine and encased by a fan housing (18), wherein both the axial fan and the fan housing are attached to the motor;
a radiator (12) mounted on a frame and provided with a fan cowl (14) on the side facing the axial fan; and
a sealing element (20) made of an elastic material and placed between the fan housing (18) and the fan cowl (14) to seal the gap between the fan housing and the fan cowl, wherein the sealing element (20) is in its installed state (operating position) attached to one component, this being either the fan housing or the fan cowl (18, 14), and lies on the outer circumference of the other component, this being either the fan housing or the fan cowl, while forming a seal,
**characterised in that**
the sealing element (20) can be brought into an installed position in which it is folded back onto the one component, this being either the fan housing or the fan cowl (18, 14), to which it is attached and can in this position be located by means of a continuous rubber bead (26), wherein the sealing element is in the installed position preloaded towards the operating position in such a way that, if the location of the installed position is released, it unfolds or snaps into its operating position onto the outer circumference of the other component, this being either the fan housing or the fan cowl.

2. Cooling module arrangement according to claim 1,
**characterised in that**
the sealing element (20) is permanently joined to the one component, this being either the fan housing or the fan cowl (18, 14), by means of hard-soft joining technology, in particular by means of moulding-on.

3. Cooling module arrangement according to claim 1,
**characterised in that**
the sealing element (20) has at the end facing the one component, this being either the fan housing or the fan cowl (18, 14), at least one projecting element (28a-c) which engages a corresponding recess (32a-c) **in that** component.

4. Cooling module arrangement according to claim 3,
**characterised in that**
the sealing element (20) further has at the end facing the one component, this being either the fan housing or the fan cowl (18, 14), a hook element (30) which engages a corresponding hook-shaped projection (34) on that component for radially holding the sealing element to that component.

5. Cooling module arrangement according to any of claims 1 to 4,
**characterised in that**
the sealing element (20) can additionally be secured in its installed position by means of a separate mechanical locating device.

6. Cooling module arrangement according to any of claims 1 to 5,
**characterised in that**
the sealing element (20) is secured to the fan cowl (14), its free end lying on the outer circumference of the fan housing (18) in the operating position.

## Revendications

1. Ensemble module de refroidissement pour un véhicule à moteur qui comporte un ventilateur axial (16) relié à un moteur et entouré par un carter de ventilateur (18), tant le ventilateur axial que le carter de ventilateur étant fixés de manière solidaire au moteur, un radiateur (12) fixé à un châssis et dont la face orientée vers le ventilateur axial est pourvue d'un capot de ventilateur (14), et un élément d'étanchéité (20) fabriqué dans un matériau élastique est monté entre le carter de ventilateur (18) et le capot de ventilateur (14) pour fermer de façon étanche la fente comprise entre ledit carter et ledit capot, l'élément d'étanchéité (20), à l'état monté (position active) étant fixé à un élément du carter de ventilateur et du capot de ventilateur (18, 14) et repose, en créant l'étanchéité, sur la périphérie extérieure de l'autre élément du carter de ventilateur et du capot de ventilateur, **caractérisé en ce que** l'élément d'étanchéité (20) peut être mis dans une position de montage, dans laquelle il est rabattu ou replié sur l'un des éléments du carter de ventilateur (18) et du capot de ventilateur (14) auquel il est fixé, puis bloqué dans cette position par un bourrelet en caoutchouc (26), quand l'élément d'étanchéité se trouve dans ladite position de montage il est mis, avec une précontrainte, en position active de telle sorte que lorsqu'il est débloqué et quitte sa position de montage, il se déplie ou s'ouvre élastiquement pour prendre sa position active sur la périphérie extérieure de chaque autre élément du carter de ventilateur et du capot de ventilateur.

2. Ensemble module de refroidissement selon la revendication 1, **caractérisé en ce que** l'élément d'étanchéité (20) est solidarisé à l'un des éléments du carter de ventilateur et de capot de ventilateur (18, 14) par la technologie d'assemblage dure/souple, en particulier par moulage par injection.

3. Ensemble module de refroidissement selon la revendication 1, **caractérisé en ce que** l'élément d'étanchéité (20) présente sur son extrémité orientée vers l'un des éléments de carter de ventilateur et capot de ventilateur (18, 14) au moins un élément en saillie (28a-c) lequel est en prise avec un évidement correspondant (32a-c) dans l'un des éléments.

4. Ensemble module de refroidissement selon la revendication 3, **caractérisé en ce que** l'élément d'étanchéité (20) sur son extrémité orientée vers l'un des éléments de carter de ventilateur et du capot de ventilateur (18, 14) présente un élément crochet (30) qui est en prise avec un élément en saillie (34) correspondant en forme de crochet prévu sur l'un des éléments pour fixer radialement l'élément d'étanchéité sur l'un des éléments.

5. Ensemble module de refroidissement selon l'une quelconque des revendications 1 à 4, **caractérisé en ce que** l'élément d'étanchéité (20) peut être en outre bloqué dans sa position de montage au moyen d'un dispositif de fixation mécanique séparé.

6. Ensemble module de refroidissement selon l'une quelconque des revendications 1 à 5, **caractérisé en ce que** l'élément d'étanchéité (20) est fixé au capot de ventilateur (14) et dans sa position active avec son extrémité libre, repose, en créant l'étanchéité sur la périphérie extérieure du carter de ventilateur (18).
